# EUROPÄISCHE PATENTSCHRIFT

(11) **EP 2 914 944 B1**
(45) Veröffentlichungstag und Bekanntmachung des Hinweises auf die Patenterteilung: **12.02.2020**
(21) Anmeldenummer: 13786658.8
(22) Anmeldetag: 04.11.2013
(51) Int. Cl.: G01M 3/00

(54) **VERFAHREN ZUR PRÜFUNG EINER DICHTHEITSPRÜFANLAGE**
METHOD FOR TESTING A LEAK TIGHTNESS TESTING SYSTEM
PROCÉDÉ DE CONTRÔLE D'UNE INSTALLATION DE CONTRÔLE D'ÉTANCHÉITÉ

(30) Priorität: 05.11.2012 DE 102012220108
(43) Veröffentlichungstag der Anmeldung: 09.09.2015
(73) Patentinhaber: Inficon GmbH, 50968 Köln (DE)
(72) Erfinder: DECKER, Silvio, 50999 Köln (DE); DAUENHAUER, Michael, 50937 Köln (DE)
(74) Vertreter: dompatent von Kreisler Selting Werner - Partnerschaft von Patent- und Rechtsanwälten mbB
(86) Internationale Anmeldenummer: PCT/EP2013/072955
(87) Internationale Veröffentlichungsnummer: WO 2014/068118

(56) Entgegenhaltungen:
- CN-A- 101 726 396
- US-A- 5 363 689

## Beschreibung

Die Erfindung betrifft ein Verfahren zur Prüfung einer Dichtheitsprüfanlage unter Verwendung einer mit einem Prüfleck versehenen Prüfleckvorrichtung.

Bei der Überprüfung oder Kalibrierung von Dichtheitsprüfanlagen, mit denen Prüflinge auf Dichtheit geprüft werden, finden Prüflecks mit einer vorgegebenen, bekannten Leckrate Anwendung. Das Prüfleck ist Teil einer Prüfleckvorrichtung, die einen Hohlraum aufweist, der mit Luft befüllbar ist. Das Prüfleck ist in einer den Hohlraum umgebenden Wandung der Prüfleckvorrichtung ausgebildet. Bei den Prüflingen handelt es sich typischerweise um Verpackungen von Lebensmitteln, Pharmazeutika oder steril verpackten, in der Medizin eingesetzten Gegenständen. Die Dichtheitsprüfung wird eingesetzt, um Undichtheiten der Verpackung zu erkennen, die zu einem Verderben des verpackten Produkts führen könnten. Der auf Dichtheit zu prüfende Prüfling ist mit einer dünnen Wandung versehen, die die Verpackung des Produkts bildet. Die Prüfleckvorrichtung kann außen an der Wandung des Prüflings befestigt werden oder unabhängig von dem Prüfling getestet werden.

Die Dichtheitsprüfung erfolgt automatisiert mit Dichtheitsprüfanlagen. Vor dem Hintergrund, dass bereits kleine Lecks einer Verpackung zum Verderb des verpackten Produkts führen können, müssen die Dichtheitsprüfanlagen und Leckdetektoren in der Lage sein, kleine Lecks mit hoher Zuverlässigkeit zu erkennen. Die Dichtheitsprüfanlagen müssen in regelmäßigen Abständen getestet und gegebenenfalls kalibriert werden. Hierzu wird in der den Hohlraum umgebenden Wandung einer Prüfleckvorrichtung das Prüfleck mit einer bekannten, vorgegebenen Leckrate ausgebildet.

Es ist bekannt, zur Prüfung einer Dichtheitsprüfanlage die Leckrate eines solchen Prüflecks zu messen (US 5 363 689). Hierzu wird der Hohlraum der Prüfleckvorrichtung mit einem Gas (meist Luft) befüllt und dadurch das Prüfleck von innen mit einem Druck beaufschlagt. Der Hohlraum ist als geschlossenes Volumen mit vorgegebener und bekannter Leckrate durch das Prüfleck ausgebildet. Die Leckrate ist durch den Leitwert des Prüflecks und durch die Druckdifferenz zwischen dem Innendruck innerhalb des Hohlraumes und dem Außendruck außerhalb der Prüfleckvorrichtung definiert. Nachdem der Hohlraum der Prüfleckvorrichtung einmalig zu Beginn der Prüfung befüllt wurde, nimmt der Innendruck der Prüfleckvorrichtung aufgrund des ausströmenden Gases während der Prüfung und von Prüfung zu Prüfung ab. Diese Druckabnahme ist umso größer, je größer die Leckrate ist und je häufiger die Nutzung des Prüflecks erfolgt. Die Leckrate der Prüfleckvorrichtung nimmt dadurch ständig ab und die Prüfleckvorrichtung muss manuell wiederbefüllt oder das Prüfleck neu kalibriert werden.

Bei der Prüfleckvorrichtung kann es sich beispielsweise um einen Prüfling, das heißt um eine Lebensmittelverpackung oder eine andersartige Verpackung, handeln. Alternativ kann die Prüfleckvorrichtung auch separat von dem Prüfling ausgebildet sein und beispielsweise außen an einem Prüfling befestigt werden.

Der Erfindung liegt die Aufgabe zugrunde, ein verbessertes Verfahren zur Prüfung einer Dichtheitsprüfanlage unter Verwendung einer mit einem Prüfleck versehenen Prüfleckvorrichtung zu schaffen.

Das erfindungsgemäße Verfahren ist definiert durch die Merkmale von Anspruch 1. Demnach wird
a) der Hohlraum der Prüfleckvorrichtung mit Umgebungsluft befüllt, bis im Inneren des Hohlraumes ein Innendruck P1 herrscht, der atmosphärischem Umgebungsdruck entspricht,
b) dann ein Außendruck P2 im Bereich außerhalb des Prüflings hergestellt, der kleiner ist als der Innendruck P1,
c) anschließend die Leckrate der durch das Prüfleck von innen nach außen strömenden Luft gemessen und
d) zuletzt der Außendruck P2 in dem die Prüfleckvorrichtung umgebenden Bereich auf atmosphärischen Umgebungsdruck erhöht.

Die Verfahrensschritte a), b), c) und d) werden nacheinander in dieser Reihenfolge durchgeführt. Wenn der Hohlraum mit Umgebungsluft befüllt ist und anschließend gemäß b) der die Prüfleckvorrichtung umgebende Außendruck P2 auf einen Druck unterhalb atmosphärischen Drucks reduziert ist, ist der Innendruck des Hohlraumes größer als der Außendruck außerhalb des Hohlraumes. In Folge dessen strömt die Luft durch das Prüfleck aus dem Hohlraum von innen nach außen heraus. Beim Ausströmen der Luft wird die Leckrate des Prüflecks durch ein bekanntes Verfahren zur Dichtheitsprüfung, wie z. B. eine Messung des Druckanstiegs außerhalb der Prüfleckvorrichtung, gemessen oder bestimmt.

Nach Abschluss der Messung oder Bestimmung wird anschließend die Prüfleckvorrichtung in eine Atmosphäre aus Umgebungsluft gebracht, die die Prüfleckvorrichtung mit atmosphärischem Umgebungsdruck als Außendruck P2 umgibt. Der Außendruck des die Prüfleckvorrichtung umgebenden Bereichs ist dann größer als der Innendruck im Inneren des Hohlraumes, so dass die Luft aus der Atmosphäre außerhalb der Prüfleckvorrichtung durch das Prüfleck ins Innere der Prüfleckvorrichtung strömt, wodurch die Prüfleckvorrichtung wieder mit Umgebungsluft befüllt wird. Der atmosphärische Außendruck wird so lange aufrecht erhalten, bis der Innendruck in dem Hohlraum dem atmosphärischen Umgebungsdruck entspricht. Das Verfahren kann sodann erneut begonnen werden, um eine weitere Prüfung durchzuführen.

Das Befüllen der Prüfleckvorrichtung sollte bei atmosphärischem Umgebungsdruck durch das Prüfleck hindurch erfolgen. Zur Beschleunigung des Befüllens des Hohlraumes kann die den Hohlraum umgebende Wandung der Prüfleckvorrichtung zusätzlich zu dem Prüfleck mit einem Überdruckventil versehen sein, das automatisch öffnet, sobald der die Prüfleckvorrichtung umgebende Außendruck den Innendruck innerhalb des Hohlraumes übersteigt.

Als atmosphärischer Druck wird ein Druck angesehen, der im Bereich zwischen 980 und 1050 mbar, vorzugsweise im Bereich zwischen 1000 und 1020 mbar und insbesondere etwa 1013 mbar beträgt.

Der Außendruck in dem Bereich außerhalb der Prüfleckvorrichtung kann im Verfahrensschritt b) vorteilhafterweise ein Vakuumdruck von weniger als 300 mbar (Grobvakuum) oder weniger als 10⁻³ mbar (Feinvakuum) betragen.

Beim Wiederbefüllen der Prüfleckvorrichtung durch Anwendung des Verfahrensschritts d) ist der Innendruck P1 im Inneren des Hohlraumes geringer als der Außendruck P2 in dem die Prüfleckvorrichtung umgebenden Bereich. Das Prüfleck sollte zumindest bei der Durchführung der Schritte c) und d) geöffnet sein, damit Umgebungsluft durch das Prüfleck hindurch strömen kann. Im Falle eines zusätzlichen Überdruckventils öffnet dieses automatisch, sobald der Außendruck P2 größer ist als der Innendruck P1, um das Befüllen des Hohlraumes mit Umgebungsluft zu beschleunigen.

Vorteilhafterweise werden die Verfahrensschritte a) - d) zumindest einmal und vorzugsweise mehrmals nacheinander durchgeführt, wobei sich der Verfahrensschritt a) einer nachfolgenden Prüfung an den Verfahrensschritt d) einer vorrangehenden Prüfung anschließt. Dabei wird durch den Verfahrensschritt d) der Verfahrensschritt a) einer jeweils nachfolgenden Prüfung durchgeführt und so der Hohlraum wiederbefüllt, bis im Inneren des Hohlraumes atmosphärische Umgebungsdruck herrscht.

Die Erfindung bietet den Vorteil, dass die Prüfleckvorrichtung insbesondere bei Druckanstiegsmessungen für große Leckraten automatisch wiederbefüllt wird, ohne dass ein aktives Befüllen der Prüfleckvorrichtung erfolgen muss. Die Prüfleckvorrichtung befüllt sich von selbst und bedarf dadurch nahezu keiner Wartung.

Im Folgenden wird anhand der Figuren ein Ausführungsbeispiel der Erfindung näher erläutert. Es zeigen:
- Fig. 1: eine schematische Darstellung der Prüfleckvorrichtung während der Leckratenmessung und
- Fig. 2: die Darstellung nach Fig. 1 während der Wiederbefüllung.

In den Figuren ist die Prüfleckvorrichtung 10 in einem schematischen Querschnitt dargestellt. Die Prüfleckvorrichtung 10 weist eine einen Hohlraum 12 umgebende Wandung 14 auf, die mit einem Prüfleck 16 in Form eines Loches in der Wandung 14 versehen ist. Bei dem Prüfleck 16 kann es sich um ein Permeationsleck, eine Kapillare, eine verstellbare Blende oder um ein einfaches Loch mit geringem Durchmesser handeln.

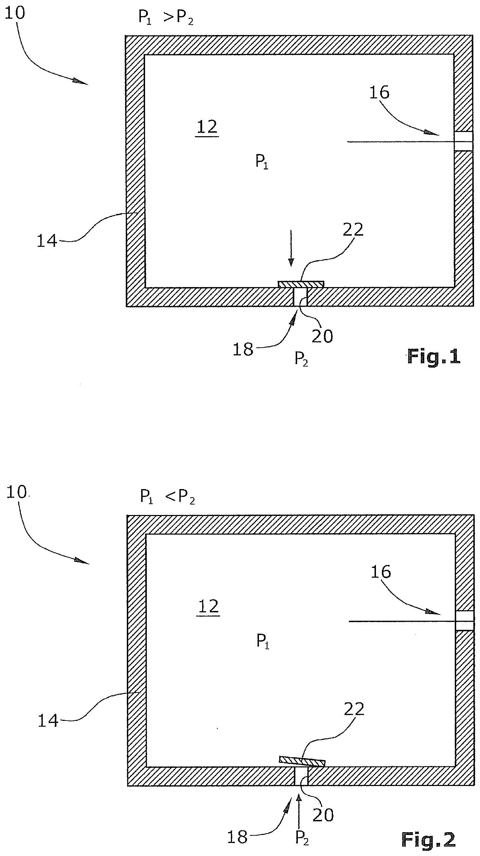

In einem anderen Bereich der Wandung 14 ist ein Überdruckventil 18 ausgebildet. Das Überdruckventil 18 besteht aus einem Loch 20 und einer Membran 22, die bei Überdruck im Inneren des Hohlraumes 12 von innen gegen die Wandung 14 im Bereich des Loches 20 drückt und dieses dichtend verschließt. Dies ist in Fig. 1 dargestellt. Bei äußerem Überdruck, wie in Fig. 2 dargestellt, drückt die von außen durch das Loch 20 einströmende Luft die Membran 22 nach innen, wodurch das Überdruckventil 18 öffnet und die Luft nach innen in den Hohlraum 12 einströmen kann.

Bei der Prüfung einer Dichtheitsprüfanlage wird in einem ersten Schritt der Hohlraum 12 so lange mit Luft aus der Umgebung der Prüfleckvorrichtung befüllt, bis der Innendruck P1 im Inneren des Hohlraumes 12 atmosphärischem Druck von etwa 1013 mbar entspricht. Beim erstmaligen Befüllen des Hohlraumes 12 sollte der Außendruck P2 außerhalb des Hohlraumes 12 zumindest der atmosphärische Druck sein, auf den der Innendruck P1 gebracht werden soll.

Nachdem der Hohlraum befüllt wurde, wird der Außendruck P2 außerhalb des Hohlraumes 12, das heißt also der Druck P2 in dem die Prüfleckvorrichtung 10 umgebenden Bereich, auf einen Vakuumdruck abgesenkt, der kleiner als der Innendruck P1 ist. Ein typischer Vakuumdruck ist geringer als 300 mbar.

Nach dem der Außendruck P2 gegenüber dem Innendruck P1 abgesenkt worden ist, wird die Leckrate des durch das Prüfleck von innen nach außen strömenden Gases durch Messen des Anstiegs des Außendrucks P2 gemessen. Dabei ist die Prüfleckvorrichtung in einer gasdichten Testkammer enthalten, so dass der Druck P2 nur durch das Prüfleck erhöht wird.

Während der Messung sinkt der Innendruck P1 gegenüber dem Außendruck P2 kontinuierlich ab und nähert sich dem Außendruck P2 nach und nach an, während der Außendruck P2 ansteigt. Nachdem die Leckrate gemessen worden ist, wird die Prüfleckvorrichtung 10 in eine Gasatmosphäre aus Umgebungsluft mit atmosphärischem Druck eingebracht. Der Außendruck P2 beträgt dann mindestens 1000 mbar (atmosphärischer Druck) und ist somit größer als der im Inneren des Hohlraumes 12 herrschende Innendruck P1. Die die Prüfleckvorrichtung 10 umgebende Luft strömt dann automatisch durch das Prüfleck 16 und durch das Überdruckventil 18 in den Hohlraum 12 ein, bis der Innendruck P1 dem äußeren Umgebungsdruck P2 entspricht. Sobald der Innendruck P1 dem Außendruck P2 entspricht oder zumindest einem ausreichenden atmosphärischen Druck von mindestens 980 mbar entspricht, ist der Hohlraum zur Durchführung einer erneuten Prüfung wiederbefüllt. Für die erneute Prüfung können dann die Schritte b), c) und d) angewendet werden.

## Patentansprüche

1. Verfahren zur Prüfung einer Dichtheitsprüfanlage unter Verwendung einer mit einem Prüfleck (16) versehenen Prüfleckvorrichtung (10), die einen mit einem Gas befüllbaren Hohlraum (12) aufweist und in einer Testkammer der Dichtheitsprüfanlage angeordnet ist, mit den Schritten
a) Befüllen des Hohlraumes (12) mit Umgebungsluft bis auf einen Innenduck (P1) im Inneren des Hohlraumes (12), der atmosphärischem Umgebungsdruck entspricht,
b) Herstellen eines Außendrucks (P2) in dem die Prüfleckvorrichtung (10) umgebenden Bereich, der geringer ist als der Innendruck (P1),
c) Messen der Leckrate der die Prüfleckvorrichtung (10) durch das Prüfleck (16) von innen nach außen durchströmenden Luft und
d) Herstellen eines Außendrucks in der Testkammer in dem die Prüfleckvorrichtung umgebenden Bereich unter Verwendung einer aus Umgebungsluft bestehenden Atmosphäre mit atmosphärischem Umgebungsdruck.

2. Verfahren nach Anspruch 1, **dadurch gekennzeichnet, dass** das Befüllen der Prüfleckvorrichtung (10) gemäß Schritt a) bei atmosphärischem Umgebungsdruck als Außendruck (P2) erfolgt.

3. Verfahren nach einem der vorhergehenden Ansprüche, **dadurch gekennzeichnet, dass** das Befüllen der Prüfleckvorrichtung (10) durch das Prüfleck (16) erfolgt.

4. Verfahren nach einem der vorhergehenden Ansprüche, **dadurch gekennzeichnet, dass** der atmosphärische Umgebungsdruck ein Druck in dem Bereich zwischen 980 mbar und 1050 mbar ist.

5. Verfahren nach Anspruch 4, **dadurch gekennzeichnet, dass** der atmosphärische Umgebungsdruck ein Druck im Bereich zwischen 1000 mbar und 1020 mbar ist.

6. Verfahren nach Anspruch 4 oder 5, **dadurch gekennzeichnet, dass** der atmosphärische Umgebungsdruck etwa 1013 mbar beträgt.

7. Verfahren nach einem der vorhergehenden Ansprüche, **dadurch gekennzeichnet, dass** der Außendruck (P2) im Verfahrensschritt b) ein Vakuumdruck ist.

8. Verfahren nach einem der vorhergehenden Ansprüche, **dadurch gekennzeichnet, dass** der Innendruck (P1) im Verfahrensschritt d) geringer ist als der Außendruck (P2).

9. Verfahren nach einem der vorhergehenden Ansprüche, **dadurch gekennzeichnet, dass** das Prüfleck (16) zumindest während der Durchführung der Verfahrensschritte c) und d) geöffnet ist.

10. Verfahren nach einem der vorhergehenden Ansprüche, **dadurch gekennzeichnet, dass** die Prüfleckvorrichtung (10) zur Wiederbefüllung mit einem Überdruckventil (18) versehen ist, das automatisch öffnet, wenn der Außendruck (P2) den Innendruck (P1) übersteigt.

11. Verfahren nach einem der vorhergehenden Ansprüche, **dadurch gekennzeichnet, dass** sich die Prüfleckvorrichtung (10) in einer Testkammer befindet und die Leckrate gemäß Schritt c) durch Messen des Anstiegs des Außendrucks P2 innerhalb der Testkammer gemessen wird.

12. Verfahren nach einem der vorhergehenden Ansprüche, **dadurch gekennzeichnet, dass** die Verfahrensschritte a) - d) zumindest einmal wiederholt werden, wobei das Befüllen des Hohlraumes (12) gemäß Schritt a) durch den Verfahrensschritt d) erfolgt.

## Claims

1. A method for testing a leakage detection system by using a leak detection device (10) that is provided with a test leak (16), has a cavity (12) that can be filled with a gas, and is arranged in a test chamber of the leak detection system, comprising the following steps:
a) filling the cavity (12) with ambient air until an interior pressure (P1) in the interior of the cavity (12) corresponds to the ambient atmospheric pressure,
b) establishing an exterior pressure (P2) in the area surrounding the leak detection device (10) that is lower than the interior pressure (P1),
c) measuring of the leakage rate of the air flowing from the interior to the exterior through the test leak (16) of the leak detection device (10), and
d) establishing an atmosphere consisting of ambient air with an ambient atmospheric pressure as exterior pressure in the test chamber in the area surrounding the leak detection device.

2. The method as claimed in claim 1, **characterized in that** the filling of the leak detection device (10) according to step a) takes place at an ambient atmospheric pressure as exterior pressure (P2).

3. The method as claimed in one of the preceding claims, **characterized in that** the filling of the leak detection device (10) takes place through the test leak (16).

4. The method as claimed in one of the preceding claims, **characterized in that** the ambient atmospheric pressure is a pressure ranging between 980 mbar and 1050 mbar.

5. The method as claimed in claim 4, **characterized in that** the ambient atmospheric pressure is a pressure ranging between 1000 mbar and 1020 mbar.

6. The method as claimed in claim 4 or 5, **characterized in that** the ambient atmospheric pressure is approximately 1013 mbar.

7. The method as claimed in one of the preceding claims, **characterized in that** the exterior pressure (P2) in method step b) is a vacuum pressure.

8. The method as claimed in one of the preceding claims, **characterized in that** the interior pressure (P1) in method step d) is lower than the exterior pressure (P2).

9. The method as claimed in one of the preceding claims, **characterized in that** the test leak (16) is open at least while method steps c) and d) are being performed.

10. The method as claimed in one of the preceding claims, **characterized in that** the leak detection device (10) is provided with a pressure control valve (18) for refilling that opens automatically when the exterior pressure (P2) exceeds the interior pressure (P1).

11. The method as claimed in one of the preceding claims, **characterized in that** the leak detection device (10) is located in a test chamber and the leakage rate according to step c) is measured by measuring the increase in the exterior pressure P2 within the test chamber.

12. The method as claimed in one of the preceding claims, **characterized in that** the method steps a) through d) are repeated at least once, wherein the filling of the cavity (12) according to step a) is performed by means of method step d).

## Revendications

1. Procédé de vérification d'une installation de contrôle d'étanchéité en utilisant un dispositif de contrôle de fuite (10) doté d'une fuite-étalon (16), lequel comporte un espace creux (12) pouvant être rempli de gaz et est agencé dans une chambre d'essai de l'installation de contrôle d'étanchéité, avec les étapes
a) remplissage de l'espace creux (12) avec de l'air environnant jusqu'à une pression interne (P1) à l'intérieur de l'espace creux (12) correspondant à la pression atmosphérique environnante,
b) établissement d'une pression externe (P2) dans la zone entourant le dispositif de contrôle de fuite (10), laquelle est inférieure à la pression interne (P1),
c) mesure du taux de fuite de l'air parcourant le dispositif de contrôle de fuite (10) de l'intérieur vers l'extérieur à travers la fuite-étalon (16) et
d) établissement d'une pression externe dans la chambre d'essai dans la zone entourant le dispositif de contrôle de fuite en utilisant une atmosphère constituée d'air environnant à la pression atmosphérique environnante.

2. Procédé selon la revendication 1, **caractérisé en ce que** le remplissage du dispositif de contrôle de fuite (10) selon l'étape a) s'effectue avec la pression atmosphérique environnante comme pression externe (P2).

3. Procédé selon l'une des revendications précédentes, **caractérisé en ce que** le remplissage du dispositif de contrôle de fuite (10) s'effectue par la fuite-étalon (16) .

4. Procédé selon l'une des revendications précédentes, **caractérisé en ce que** la pression atmosphérique environnante est une pression dans l'intervalle entre 980 mbar et 1050 mbar.

5. Procédé selon la revendication 4, **caractérisé en ce que** la pression atmosphérique environnante est une pression dans l'intervalle entre 1000 mbar et 1020 mbar.

6. Procédé selon la revendication 4 ou 5, **caractérisé en ce que** la pression atmosphérique environnante est d'environ 1013 mbar.

7. Procédé selon l'une des revendications précédentes, **caractérisé en ce que** la pression externe (P2) dans l'étape de procédé b) est une dépression.

8. Procédé selon l'une des revendications précédentes, **caractérisé en ce que** la pression interne (P1) dans l'étape de procédé d) est inférieure à la pression externe (P2).

9. Procédé selon l'une des revendications précédentes, **caractérisé en ce que** la fuite-étalon (16) est ouverte au moins pendant l'exécution des étapes de procédé c) et d).

10. Procédé selon l'une des revendications précédentes, **caractérisé en ce que** le dispositif de contrôle de fuite (10) est prévu doté d'une soupape de surpression (18) pour le remplissage, laquelle s'ouvre automatiquement lorsque la pression externe (P2) excède la pression interne (P1).

11. Procédé selon l'une des revendications précédentes, **caractérisé en ce que** le dispositif de contrôle de fuite (10) se trouve dans une chambre d'essai et le taux de fuite est mesuré selon l'étape c) par mesure de l'augmentation de la pression externe P2 à l'intérieur de la chambre d'essai.

12. Procédé selon l'une des revendications précédentes, **caractérisé en ce que** les étapes a) à d) sont répétées au moins une fois, dans lequel le remplissage de l'espace creux (12) selon l'étape a) s'effectue par l'étape de procédé d).
